# EUROPEAN PATENT APPLICATION

(11) **EP 4 730 360 A1**
(43) Date of publication of application: **22.04.2026**
(21) Application number: 23942145.6
(22) Date of filing: 13.11.2023
(51) Int. Cl.: G21C 17/00, G21C 17/108, G21C 17/06, G06F 17/18

(54) **ANALYSIS METHOD AND APPARATUS FOR MEASUREMENT UNCERTAINTY OF POWER DISTRIBUTION OF REACTOR CORE, AND DEVICE**

(30) Priority: 19.06.2023 CN 202310724676
(71) Applicant: China Nuclear Power Technology Research Institute Co., Ltd., Shenzhen, Guangdong 518031 (CN); China General Nuclear Power Corporation, Shenzhen, Guangdong 518028 (CN); CGN Power Co., Ltd., Shenzen, Guangdong 518028 (CN)
(72) Inventor: YU, Chao, Shenzhen, Guangdong 518031 (CN); LU, Xianghui, Shenzhen, Guangdong 518031 (CN); HE, Mingtao, Shenzhen, Guangdong 518031 (CN); HUANG, Jie, Shenzhen, Guangdong 518031 (CN); CHAI, Fanchao, Shenzhen, Guangdong 518031 (CN); LIN, Jun, Shenzhen, Guangdong 518031 (CN); WANG, Xin, Shenzhen, Guangdong 518031 (CN); DUAN, Rong, Shenzhen, Guangdong 518031 (CN); SHI, Xiaqing, Shenzhen, Guangdong 518031 (CN); QI, Jianan, Shenzhen, Guangdong 518031 (CN)
(74) Representative: V.O.
(86) International application number: PCT/CN2023/131195
(87) International publication number: WO 2024/259878

(57) **Abstract**

An analysis method and apparatus for measurement uncertainty of a reactor core power distribution, a device, a storage medium and a product are provided. The analysis method and apparatus for measurement uncertainty of a reactor core power distribution includes: constructing a simulated operating state based on an actual operating state of a reactor core, determining state parameters of the reactor core under the simulated operating state, and obtaining a group constant the reactor core (S202); performing a material composition calculation based on a material calculation subroutine in a precise calculation program and the state parameters to obtain a material composition of each fuel rod in the reactor core (S204); performing a power calculation based on a power calculation subroutine in the precise calculation program and the material composition of each fuel rod to obtain a real power distribution of the reactor core, and obtaining a response intensity of a detector in the reactor core (S206); determining power parameters of the reactor core under the simulated operating state based on the state parameters and the group constant, performing a flux map simulation measurement based on the response intensity of the detector and the power parameters to obtain a simulated power distribution of the reactor core (S208); and determining the measurement uncertainty of the reactor core power distribution based on a difference between the real power distribution and the simulated power distribution (S208).

## Description

### CROSS-REFERENCE TO RELATED APPLICATION

The present application claims priority to Chinese Patent Application No. 2023107246764 filed on June 19, 2023, and entitled "Analysis Method and Apparatus for Measurement Uncertainty of Reactor Core Power Distribution, and Device", the content of which is expressly incorporated herein by reference in its entirety.

### TECHNICAL FIELD

The present application relates to the field of reactor core measurement and protection technology, particularly to an analysis method and apparatus for measurement uncertainty of a reactor core power distribution, a computer device, and a storage medium.

### BACKGROUND

Neutron flux measurement systems in a reactor core are generally used for measuring the reactor core power distribution or generating a trigger signal for a reactor core protection system according to measurement results. The measurement results are reconstructed from actual measurement values of some channels combined with theoretical values.

In conventional technologies, reactor core calculation programs are primarily employed to perform the sensitivity analysis to identify the disturbance of each input uncertainty component on the calculation results. The final uncertainty of the measurement system is then statistically determined. However, the power parameters used in conventional technologies during the calculation process are hypothetical theoretical parameters, which may lead to a significant difference between the real power parameters assumed in the calculation and the actual parameters, and ultimately result in an unreasonable measurement uncertainty.

### SUMMARY

According to the embodiments of the present invention, an analysis method and an analysis apparatus for measurement uncertainty of a reactor core power distribution, a computer device, and a computer-readable storage medium are provided.

In the first aspect of the present application, an analysis method for measurement uncertainty of a reactor core power distribution is provided, including:
constructing a simulated operating state based on an actual operating state of the reactor core, determining state parameters of the reactor core under the simulated operating state, and obtaining a group constant representing a grid cross-sectional value of the reactor core;
performing a material composition calculation based on a material calculation subroutine in a precise calculation program and the state parameters, and obtaining the material composition of each fuel rod in the reactor core;
performing a power calculation based on a power calculation subroutine in the precise calculation program and the material composition of each fuel rod, obtaining a real power distribution of the reactor core, and obtaining a response intensity of a detector in the reactor core;
determining power parameters of the reactor core under the simulated operating state based on the state parameters and the group constant, performing a flux map simulation measurement based on the response intensity of the detector and the power parameters, and obtaining the simulated power distribution of the reactor core; and
determining the measurement uncertainty of the reactor core power distribution based on a difference between the real power distribution and the simulated power distribution.

In the second aspect of the present application, an analysis apparatus for measurement uncertainty of a reactor core power distribution is provided, including:
a state construction module, configured to construct a simulated operating state based on an actual operating state of the reactor core, determine state parameters of the reactor core under the simulated operating state, and acquire a group constant representing a grid cross-sectional value of the reactor core;
a material composition calculation module, configured to perform a material composition calculation based on a material calculation subroutine in a precise calculation program and the state parameters to obtain the material composition of each fuel rod in the reactor core;
a real power distribution determination module, configured to perform a power calculation based on a power calculation subroutine in the precise calculation program and the material composition of each fuel rod, obtain a real power distribution of the reactor core, and acquire a response intensity of a detector in the reactor core;
a simulated power distribution determination module, configured to determine power parameters of the reactor core under the simulated operating state based on the state parameters and the group constant, and perform a flux map simulation measurement to obtain the simulated power distribution of the reactor core based on the response intensity of the detector and the power parameters; and
a measurement uncertainty determination module, configured to determine the measurement uncertainty of the reactor core power distribution based on a difference between the real power distribution and the simulated power distribution.

In the third aspect of the present application, a computer device is provided, including one or more processors and a memory storing computer-readable instructions. The one or more processors, when executing the computer-readable instructions, perform steps of the above-mentioned method.

In the fourth aspect of the present application, one or more non-transitory storage media storing computer-readable instructions are provided. The computer-readable instructions, when executed by one or more processors, cause the one or more processors to perform steps of the above-mentioned method.

In the fifth aspect of the present application, a computer-readable instruction product is provided, including computer-readable instructions. The computer-readable instructions, when executed by a processor, cause the processor to perform steps of the above-mentioned method.

### BRIEF DESCRIPTION OF THE DRAWINGS

In order to more clearly illustrate the technical solution described in the embodiments of the present invention or the conventional technology, accompanying drawings required for describing the embodiments or the conventional technology are briefly introduced below. Obviously, the drawings described below are merely embodiments of the present invention, and those skilled in the art may further obtain other drawings based on the disclosed drawings without any creative work.
FIG. 1 is an application environment diagram of an analysis method for measurement uncertainty of a reactor core power distribution according to one or more embodiments.
FIG. 2 is a flow chart of an analysis method for measurement uncertainty of a reactor core power distribution according to one or more embodiments.
FIG. 3 is a structural block diagram of an analysis apparatus for measurement uncertainty of a reactor core power distribution according to one or more embodiments.
FIG. 4 is a schematic diagram of a computer device according to one or more embodiments.

### DETAILED DESCRIPTION

The technical solution in the embodiments of the present invention will be clearly and completely described below in conjunction with the drawings in the embodiments of the present invention. Obviously, the described embodiments are merely some embodiments of the present invention, rather than all of the embodiments. Based on the embodiments in the present application, all other embodiments obtained by those skilled in the art without any creative work shall fall within the scope of protection of the present application.

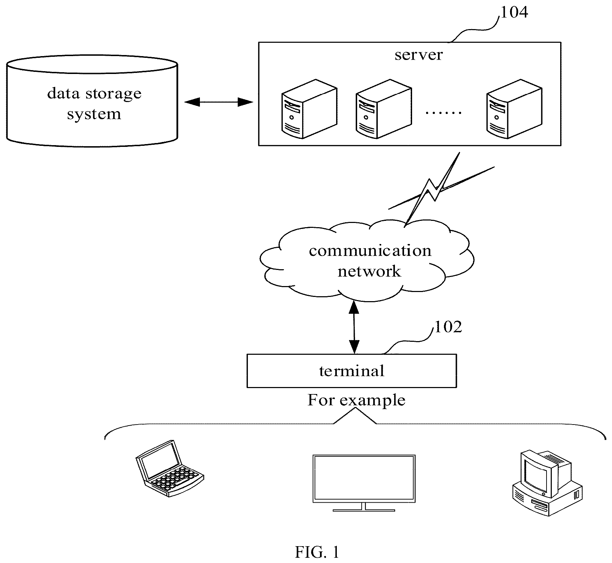

An analysis method for measurement uncertainty of a reactor core power distribution provided in the embodiments of the present invention can be applied to the application environment shown in FIG. 1. A terminal 102 communicates with a server 104 via a network. A data storage system can store data that server 104 needs to process. The data storage system can be integrated in the server 104, or can be installed on the cloud or other network servers. The server 104 constructs a simulated operating state of the reactor core according to an actual operating state of the reactor core during the actual operation, and determines state parameters of the reactor core under the simulated operating state according to the actual operating state of the reactor core. In addition, the server 104 further obtains group constants that represent mesh cross-sectional values in the reactor core. The server 104 uses a material calculation subroutine in a precise calculation program to perform a material composition calculation of a fuel rod based on the state parameters of the reactor core under the simulated operating state, thereby obtaining the material composition of each fuel rod in the reactor core. The server 104 uses a power calculation subroutine in the precise calculation program to perform a power calculation based on the obtained material composition of each fuel rod, thereby obtaining a real power distribution of the reactor core under the simulated operating state and a detector response intensity of the reactor core. The server 104 calculates power parameters of the reactor core under the simulated operating state based on the state parameters of the reactor core under the simulated operating state and the group constants of the reactor core, and uses the power parameters and the detector response intensity to perform a flux map simulation measurement, thereby obtaining the simulated power distribution of the reactor core under the simulated operating state. The server 104 obtains the measurement uncertainty of the reactor core power distribution according to a difference between the actual power distribution and the simulated power distribution of the reactor core under the simulated operating state. The terminal 102 may be, but is not limited to, various personal computers, laptops, tablets, etc. The server 104 can be implemented by using an independent server or a server cluster consisting of multiple servers.

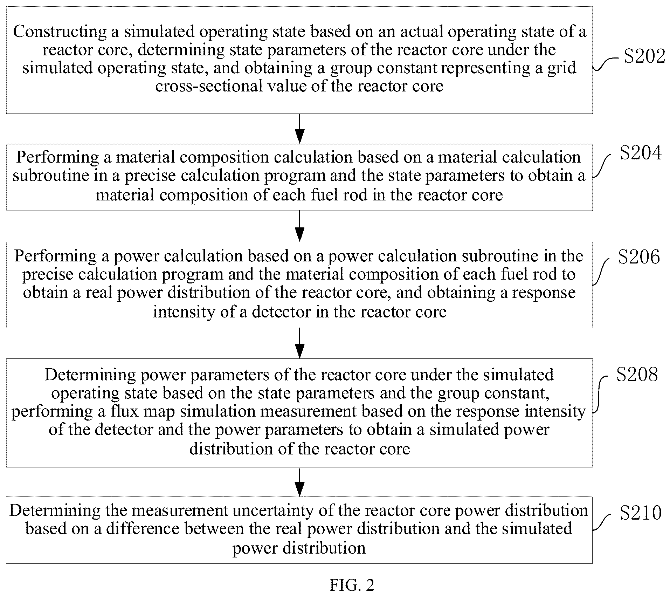

In an embodiment, as shown in FIG. 2, an analysis method for measurement uncertainty of a reactor core power distribution is provided. The method is applied to the server in FIG. 1 as an example for illustration. The method includes the following steps.

Step 202: a simulated operating state is constructed based on an actual operating state of the reactor core, state parameters of the reactor core under the simulated operating state are determined, and a group constant representing a grid cross-sectional value of the reactor core is acquired.

The state parameters include a burnup value BU(i, j), a fuel temperature Tf(i, j), a moderator temperature Tm(i, j), a moderator density Dm(i, j), 135 Xe concentration Xe(i, j), and 149 Samarium concentration Sm(i, j) at each grid in the reactor core, and an insertion position CR(m) of each control rod, where i is the grid number in the radial direction of the reactor core, and i=1, ..., I; j is the grid number in the axial direction of the reactor core, and j=1, ..., J; and m is the number of control rods in the reactor core, and m=1, ..., M.

The actual operating state of the reactor core refers to various possible physical states of the reactor core in reality. The simulated operating state of the reactor core is obtained by construction, and the state parameters under the simulated operating state need to conform to the actual situations. The simulated operating state of the reactor core is constructed based on assembly burnup and reflector layer parameters of the reactor core under the actual operating state of the reactor core. The reflector layer parameters mainly include a boron concentration, a fuel temperature, a moderator temperature and a water density, a control rod insertion state, a fuel depth in the reactor core, etc. For example, in the simulated operating state of the reactor core, the boron concentration throughout the reactor core should be approximately the same, and there will be no significant positional gradient in water density. The advantage of constructing the simulated operating state is that, in the absence of a large amount of reactor core measurement test data, the measurement uncertainty of the reactor core measurement system in terms of power distribution can be determined through a scheme based on a theoretical calculation.

Before the analysis of the measurement uncertainty in the power distribution of the reactor core is performed, it is also necessary to determine a loading mode of the reactor core and the type of detector in the reactor core. Since the measurement uncertainty is related to the loading of the reactor core, once the loading mode of the reactor core is determined, the basis for all analyses is determined and will not be changed subsequently. All analyses are conducted based on the loading mode, that is, the analysis method for the measurement uncertainty of the reactor core power distribution is determined based on the loading mode of the reactor core. Loading modes of the reactor core mainly include OUT-IN loading and low-leakage loading. The types of detectors mainly include a movable miniature fission chamber detector, a fixed self-powered detector, and a pneumatic small ball.

Optionally, the server constructs the simulated operating state of the reactor core according to the assembly burnup and reflector layer parameters of the rector core under the actual operating state of the reactor core, and uses a reactor core diffusion program to determine the burnup value, the fuel temperature, the moderator temperature, the moderator density, 135 xenon concentration, 149 samarium concentration, and the insertion position of each control rod at each grid point under the simulated operating state. The server further obtains a group constant that represents a grid cross-sectional value of the reactor core.

Step 204: a material composition calculation is performed based on a material calculation subroutine in a precise calculation program and the state parameters, to obtain the material composition of each fuel rod in the reactor core.

The precise calculation program mainly includes a Monte Carlo program and a deterministic program with an accuracy comparable to the Monte Carlo program.

The material calculation subroutine is a program in the precision calculation program used to calculate the composition or proportion of each material in the remaining materials in the fuel rod. The materials in the fuel rod may split during the combustion, for example, one material may split into two materials, and thus the quantity of those materials will change. So it is necessary to calculate the composition of each material. The material composition refers to the composition of the various materials remaining after the fuel rod is burned, which can also be understood as a proportion of the quantity of each material in the quantity of remaining materials.

Optionally, the server uses the material calculation subroutine in the Monte Carlo program to calculate the compositions of the remaining materials in each fuel rod in the reactor core, thereby obtaining the material composition in each fuel rod in the reactor core.

Optionally, the server uses a material calculation subroutine portion in the deterministic program with an accuracy comparable to the Monte Carlo program to calculate the compositions of the remaining materials in each fuel rod in the reactor core, thereby obtaining the material composition in each fuel rod in the reactor core.

Step 206: a power calculation is performed based on a power calculation subroutine in the precise calculation program and the material composition of each fuel rod, to obtain the real power distribution of the reactor core, and a response intensity of a detector in the reactor core is obtained.

The power calculation subroutine is a program in the precise calculation program used to calculate a real power distribution value of the reactor core. The real power distribution represents real values of the power distribution of the reactor core under the simulated operating state.

Optionally, the server uses the power calculation subroutine portion in the Monte Carlo program to calculate the real power distribution of the reactor core under the simulated operating state, thereby obtaining a real power distribution representing real values of the power distribution of the reactor core under the simulated operating state, and obtaining the detector response intensity of the reactor core.

Optionally, the server uses the power calculation subroutine portion in the deterministic program with accuracy comparable to the Monte Carlo program to calculate the real power distribution of the reactor core under the simulated operating state, thereby obtaining the real power distribution representing real values of the power distribution of the reactor core under the simulated operating state, and obtaining the detector response intensity of the reactor core.

Step 208: power parameters of the reactor core under the simulated operating state are determined based on the state parameters and the group constant, and a flux map simulation measurement is performed based on the detector response intensity and the power parameters to obtain the simulated power distribution of the reactor core.

The power parameters mainly include parameter factors such as a three-dimensional power distribution, a power peak factor, an axial power deviation of the reactor core, etc. The simulated power distribution represents power distribution measurement values of the reactor core under the simulated operating state.

The flux map simulation uses methods such as polynomial fitting, spline fitting, and weighting coefficients, etc., to provide measurement values that are approximate to the real values, that is, the simulated power distribution measurement values that are approximate to the real power distribution measurement values of the reactor core are provided.

The detector response intensity refers to an activity value of a detector in the reactor core, which is a response intensity resulting from activation of the detector by neutron irradiation in the reactor core, and is related to the detector type. However, when the detector specification is determined, the detector response intensity is only related to the neutron flux in the reactor core. The value of the detector response intensity is a value obtained by adding a detector manufacturing deviation and a detector current algorithm deviation, which takes into account the deviations of field operating factors from the theoretical simulation, making the calculation result closer to the real situation. The detector response intensity is obtained when calculating the real power distribution of the reactor core using a precise calculation program, such as the Monte Carlo. The detector response intensity is determined by adding a value representing uncertainty to an obtained initial detector response intensity. For example, the obtained initial detector response intensity is A, but due to the detector manufacturing error and detector current algorithm error, it is necessary to add data X representing the uncertainty to obtain the final detector response intensity A+X.

Optionally, the server calculates power parameters such as the three-dimensional power distribution, the power peak factor, and the axial power deviation of the reactor core under the simulated operating state, based on the state parameters of the reactor core under the simulated operating state and the group constant representing the grid cross-sectional value of the reactor core. Based on the obtained power parameters and the obtained detector response intensity, the server then uses methods such as polynomial fitting, spline fitting, and weighting coefficients to perform the flux map simulation measurement, providing the simulated power distribution measurement values that are approximately equal to the real power distribution measurement values of the reactor core.

Step 210: the measurement uncertainty of the reactor core power distribution is determined based on a difference between the real power distribution and the simulated power distribution.

The server determines the measurement uncertainty of the reactor core power distribution according to the difference between the real power distribution and the simulated power distribution of the reactor core under the simulated operating state. The difference mainly includes a difference between parameters such as enthalpy rise factors, hot spot factors, component power distributions, and axial power, etc., in the real power distribution and the simulated power distribution.

In the above analysis method for the measurement uncertainty of the reactor core power distribution, the simulated operating state is determined according to the actual operating state of the reactor core, and the state parameters of the reactor core under the simulated operating state are determined, so that the state parameters of the reactor core under the constructed simulated operating state can more closely reflect the actual operation situation of the reactor core. This also allows for addressing the problem of missing data through the constructed simulated operating state and the state parameters under the simulated operating state when a large amount of reactor core measurement test data is lacking. The material calculation subroutine is used to determine the material composition in the fuel rod based on the state parameters, and then the power calculation subroutine is used to determine the real power distribution of the reactor core based on the material composition in the fuel rod. These two calculation processes can be decoupled, which avoids the coupling relationship between the two steps affecting the calculation result and speed, thereby improving the speed and accuracy of the obtaining of the real power distribution, and consequently improving the accuracy rate of the measurement uncertainty of the reactor core power distribution determined through the simulated and real power distributions of the reactor core.

In an embodiment, obtaining the group constant representing the grid cross-sectional value of the reactor core includes obtaining the assembly burnup and the state parameters of the reactor core under the simulated operating state, and determining group constants of the assembly and the reflector layer of the reactor core based on the assembly burnup and the state parameters.

The assembly burnup refers to the burnup of a fuel assembly. The fuel for nuclear power plants is uranium, and its effective component is uranium-235, with a content of approximately 3%. Nuclear fuel is sintered into cylindrical uranium dioxide ceramic core blocks, which are stacked in a cladding tube made of zirconium alloy to form slender fuel rods. These fuel rods are then assembled to form fuel assemblies according to certain rules, which can then be used in nuclear power plants. Burnup is a measurement of nuclear fuel consumption in the reactor.

The assembly and reflector layer parameters mainly include: a reactor core boron concentration, a fuel temperature, a moderator temperature and a water density, a control rod insertion state, a fuel depth, and other parameter factors.

The assembly burnup and the assembly and reflector layer parameters are determined based on an assembly transport calculation program in the reactor core design program for the conventional two-step method "assembly transport calculation + reactor core diffusion calculation". The assembly transport calculation program is based on the two-dimensional assembly geometry and uses multigroup basic nuclear data to solve a multigroup neutron transport equation, thereby obtaining the distribution of the neutron flux density in space and energy within the assembly, that is, obtaining the assembly burnup and the reflector layer parameters.

Optionally, the server uses the assembly transport program to calculate the fuel assembly burnup, the reactor core boron concentration, the fuel temperature, the moderator temperature and water density, the control rod insertion state, the fuel depth, and other parameter factors of the reactor during the simulated operating state of the reactor core. After that, the assembly and reflector layer group constants of the reactor core are calculated based on the obtained assembly burnup and the state parameters.

In the present embodiment, the assembly burnup and the state parameters of the reactor core in the simulated operating state are calculated by using the assembly transport program, the accuracy of the assembly burnup and the state parameters can be improved, thereby improving the accuracy of the assembly and reflector layer group constants determined based on the assembly burnup and the reflector layer parameters.

In an embodiment, determining the power parameters of the reactor core under simulated operating state based on the state parameters and the group constant includes determining the power parameters of the reactor core under the simulated operating state using the reactor core nuclear design program based on the state parameters and the group constant. A theoretical database for reconstructing power distribution reconfiguration of the reactor core is constructed based on the power parameters, and a flux map simulation measurement is performed based on the theoretical database to obtain the simulated power distribution of the reactor core.

The reactor core nuclear design program is based on the reactor core geometry and equivalent few-group homogenization cross-section parameters, and a few-group neutron diffusion equation is solved to obtain a few-group neutron flux distribution, a power distribution of the entire reactor core, and a reactivity of the reactor core. When constructing the theoretical database, considering factors such as a nuclear data deviation and reactor core design parameter deviations, such as the power, control rod position, reactor core inlet temperature, and reactor core burnup, etc., random and uncertain data values are added on the theoretical database used by the reactor core nuclear design program, which allows for a comprehensive consideration of deviations between field operating factors and theoretical simulations, resulting in more accurate calculation results.

The power parameters mainly include a three-dimensional power distribution, a power peak factor, and an axial power deviation of the reactor core, etc. In addition to the power parameters, the theoretical database further includes a cross section of a detector and a theoretically calculated activity. The parameters contained in the theoretical database are all theoretical calculation parameters used in the flux map simulation measurement process.

Optionally, the server uses the reactor core nuclear design program to calculate the power parameters of the reactor core under the simulated operating state according to the state parameters and the group constant of the reactor core under the simulated operating state. After obtaining the power parameters, the server uses the power parameters, the cross section of the detector, and the theoretically calculated activity to generate a theoretical database, and determines the data in the theoretical database as theoretical calculation parameters for the flux map simulation measurement to perform the flux map simulation measurement, thereby obtaining the simulated power distribution of the reactor core under the simulated operating state.

In the present embodiment, by using the theoretical database constructed based on the power parameters to perform the flux map simulation measurement, the accurate simulation of the power distribution of the reactor core can be obtained, thereby improving the accuracy of the measurement uncertainty of the reactor core power distribution.

In an embodiment, after the power parameters of the reactor core under the simulated operating state are determined, the method further includes obtaining the cross section of the detector, and constructing a theoretical database for implementing power distribution reconfiguration of the reactor core based on the power parameters and the cross section of the detector.

When generating the theoretical database for implementing power distribution reconfiguration of the reactor core, the theoretically calculated activity may also be used, which is a reaction intensity generated by the activation of the detector due to neutron irradiation within the reactor core.

Optionally, the server obtains the cross section of the detector configured to detect the reactor core, and the reaction intensity generated by the activation of the detector due to neutron irradiation within the reactor core. The server generates the theoretical database for implementing the power distribution reconfiguration in the reactor core based on the cross section of the detector, the reaction intensity, and the power parameters.

In the present embodiment, the theoretical database is generated by using the power parameters, the cross section of the detector, and the theoretically calculated activity, which allows for obtaining accurate simulation of the power distribution of the reactor core when using the theoretical database to perform the flux map simulation measurement, thereby improving the accuracy of the measurement uncertainty of the reactor core power distribution.

In an embodiment, generating the theoretical database for implementing power distribution reconfiguration of the reactor core includes determining a data value representing uncertainty to be added to the theoretical database based on deviations in the nuclear data of the reactor core and reactor core design parameter deviations, and adding the data value representing the uncertainty to the theoretical database to obtain a theoretical database incorporating the data value representing the uncertainty.

The reactor core design parameter deviations refer to deviations in the power, the control rod position, the reactor core inlet temperature, the reactor core burnup, etc.

Optionally, the server obtains the deviations in the nuclear data of the reactor core, and the reactor core design parameter deviations such as the power, the control rod position, the reactor core inlet temperature, and the reactor core burnup, etc., and then determines the data value representing the uncertainty to be added to the theoretical database based on the deviations in the nuclear data, and the reactor core design parameter deviations such as deviations in the power, the control rod position, the reactor core inlet temperature, and the reactor core burnup, etc. The server adds the data value representing the uncertainty and corresponding data in the theoretical database to obtain a theoretical database incorporating the data value representing the uncertainty.

In the embodiment, a random data value representing uncertainty is added to the theoretical database used by the reactor core nuclear design program, which enables a comprehensive consideration of the deviations of field operation factors from the theoretical simulation, so that the calculation results are more accurate.

In an embodiment, performing the material composition calculation based on the material calculation subroutine in the precise calculation program and the state parameters to obtain the material composition of each fuel rod in the reactor core includes calculating the burnup of each assembly in the reactor core under the simulated operating state using the burnup calculation subroutine in the Monte Carlo program based on the state parameters and to obtain the burnup of each assembly, and determining the material composition of a fuel rod in each assembly using the material calculation subroutine in the Monte Carlo program based on the burnup of each assembly.

The Monte Carlo program is also referred to as a statistical simulation method, which refers to a method that uses random numbers or, more commonly, pseudo-random numbers to solve computational problems. The operating principle of the Monte Carlo program is continuous sampling and gradual approximation. For example, in a black background image with multiple white shapes, each of which is irregular, an area cannot be calculated using a side length formula. The Monte Carlo method, however, randomly points on the image and obtains the color of each pixel, thus obtaining the area of the white shape, i.e., the number of white points / total number of points * total area of the image. The Monte Carlo method, based on the idea of decoupling, can improve the speed of obtaining the assembly burnup, material composition of the fuel rod, and the real power distribution.

Optionally, the server uses a subroutine related to the burnup calculation portion in the Monte Carlo program to calculate the burnup based on the state parameters of the reactor core under the simulated operating state, thereby obtaining the burnup of each assembly of the reactor core under the simulated operating state. After obtaining the burnup of each assembly of the reactor core under the simulated operating state, the server uses the material calculation subroutine in the Monte Carlo program to perform the material composition calculation based on the obtained burnup of each assembly, thereby obtaining the material composition of the fuel rod in each assembly of the reactor core under the simulated operating state.

In the present embodiment, by using different subroutines in the Monte Carlo program to calculate the burnup of each assembly and the material composition of the fuel rod, the two steps of burnup calculation and material composition calculation can be decoupled, thereby improving the calculation speed of the assembly burnup and the material composition of fuel rods, and thus improving the speed of obtaining the real power distribution of the reactor core.

In an embodiment, obtaining the response intensity of the detector in the reactor core includes obtaining a manufacturing error and a current algorithm error of the detector, and adding data representing the uncertainty to the response intensity of the detector based on the manufacturing error and the current algorithm error to obtain the response intensity of the detector incorporating the data representing the uncertainty.

The manufacturing error of the detector refers to a deviation value of an actual geometric parameter achieved by the manufactured detector from a designed geometric parameter. In actual production, the technological factors that affect machining accuracy are complex and varied. For certain processing error problems, single-factor analysis alone is not sufficient. Instead, a comprehensive analysis using probability and statistical methods is required to identify and eliminate the causes of the processing errors. When the manufacturing error cannot be eliminated, the adverse effect caused by the manufacturing error can be eliminated by adding the uncertainty.

The addition of the response intensity of the detector and data representing the uncertainty refers to adding a value to an initial response intensity of the detector obtained. For example, the obtained initial response intensity of the detector is A, but due to the manufacturing error and the current algorithm error of the detector, it is necessary to add data X representing uncertainty to obtain the final response intensity of the detector A+X. For another example, the obtained initial response intensity of the detector is A, but due to the manufacturing errors and the current algorithm error of the detector, it is necessary to add data -X representing uncertainty to obtain the final response intensity of the detector A-X.

Optionally, the server first obtains the manufacturing error of the detector that occurs during the manufacturing of the detector and the current algorithm error in the detector. The server adds a value representing uncertainty to the obtained initial response intensity of the detector according to the obtained manufacturing error and current algorithm error of the detector, thereby obtaining the final response intensity of the detector for calculating the real power distribution of the reactor core under the simulated operating state.

In the present embodiment, by taking into account the manufacturing error and the current algorithm error of the detector when determining the response intensity of the detector, the finally determined response intensity of the detector can be more accurate, thereby improving the accuracy of the simulated power distribution obtained based on the response intensity of the detector and the power parameters.

In an embodiment, obtaining the response intensity of the detector in the reactor core includes obtaining a neutron flux in the reactor core when the specification of the detector in the reactor core is determined, and determining the response intensity of the detector based on the neutron flux.

The specification of the detector can be understood as a type or a model of the detector. The neutron flux refers to the number of neutrons passing through a unit area per unit time, which is an important indicator for evaluating the reactor. The neutron flux is equal to the product of a neutron density and an average velocity thereof, and the common unit of neutron flux is expressed as "neutrons per square centimeter per second". According to the difference in neutron energy, it can be divided into two types: thermal neutron flux and fast neutron flux. The measurement of neutron flux distribution is of extremely important significance for the safe operation of the reactor, fuel management, the determination of the maximum allowable power, the conduct of various experiments, and the irradiation of samples.

Optionally, the server obtains the type or model of the detector, and obtains the neutron flux in the reactor core when the type or model of the detector is determined. The server calculates the response intensity of the detector according to the obtained neutron flux in the reactor core.

In the present embodiment, by obtaining the neutron flux in the reactor core when the specification of the detector in the reactor core is determined, the response intensity of the detector can be determined based on the neutron flux.

In an embodiment, the analysis method for the measurement uncertainty of the reactor core power distribution further includes constructing a plurality of simulated operating states of the reactor core and state parameters of the reactor core under each simulated operating state, obtaining a power deviation between an actual power distribution and a simulated power distribution of the reactor core under each simulated operating state, performing a statistical analysis on the power deviation under each simulated operating state to obtain the measurement uncertainty of the reactor core power distribution.

Statistical analysis methods mainly include descriptive statistics, hypothesis testing, reliability analysis, contingency table analysis, correlation analysis, variance analysis, regression analysis, cluster analysis, and the double 95 principle, etc. For example, based on the distribution of deviation results under the plurality of simulated operating states, the final uncertainty of the power measurement is determined according to the double 95 principle. The double 95 principle refers to encompassing 95% of the data points and having a 95% confidence level.

Optionally, the server constructs simulated operating states representing each operating condition of the reactor core according to various conditions that may occur during the operation of the reactor core. The server obtains the power deviation of the reactor core under each simulated operating state according to the actual power distribution and simulated power distribution of the reactor core under each simulated operating state. The server uses the double 95 principle to perform statistical analysis on the power deviation of the reactor core under each simulated operating state, and finally obtains the measurement uncertainty of the reactor core power distribution.

In the present embodiment, by constructing a plurality of simulated operating states of the reactor core, and then determining the measurement uncertainty of the reactor core power distribution according to the statistical analysis result of the power deviation of the reactor core under each simulated operating state, the occurrence of accidental phenomena caused by a single test can be avoided, so that the finally obtained measurement uncertainty of the reactor core power distribution is more accurate, and errors are reduced.

The present application further provides an application scenario in which the above-mentioned analysis method for the measurement uncertainty of the reactor core power distribution is applied. The analysis method for the measurement uncertainty of the reactor core power distribution is applied in the application scenario as follows. For a certain reactor fuel management, the loading mode of the reactor core and the type of detector in the reactor core are determined. Based on various possible physical operating states of the reactor core, i.e. the actual operating states, "assembly transport calculation + reactor core diffusion calculation" is used to calculate the assembly burnup and state parameters of the reactor core under different simulated operating states, in which the parameters mainly include the reactor core boron concentration, the fuel temperature, the moderator temperature and water density, the control rod insertion state, the fuel depth, or other parameters. The assembly and reflector layer group constants for the reactor core calculation are obtained according to the obtained assembly burnup and state parameters. A plurality of simulated operating states of the reactor core are constructed according to various actual operating states of the reactor core, and the burnup value BU(i, j), fuel temperature Tf(i, j), moderator temperature Tm(i, j), moderator density Dm(i, j), 135 Xe concentration Xe(i, j), 149 Samarium concentration Sm(i, j), and insertion position CR(m) of each control rod at each grid in the reactor core under the simulated operating states are specified, to simulate the characteristics of the reactor core under different actual operating states, where i denotes the grid number in the radial direction of the reactor core, satisfying i = 1, ..., I, j denotes the grid number in the axial direction of the reactor core, satisfying j = 1, ..., J, and m denotes the number of control rods in the reactor core, satisfying m = 1, ..., M. By using the reactor core diffusion program in the reactor core nuclear design program, the reactor core calculation is performed according to the state parameters of the reactor core under each simulated operating state and the group constant of the reactor core, to obtain the power parameters such as the three-dimensional power distribution, the power peak factor, and the axial power deviation of the reactor core under each simulated state. The theoretical database for implementing the power distribution reconfiguration of the reactor core is generated according to the obtained power parameters of the reactor core under each simulated state, the cross section of the detector, and the theoretically calculated activity. The material composition calculation subroutine in the Monte Carlo program is used to calculate the assembly burnup under each simulated operating state of the reactor core, to obtain the material composition of each fuel rod during the burnup process. The power calculation subroutine in the Monte Carlo program is used to calculate the real power distribution of the reactor core and the response intensity of the detector in the reactor core under each simulated operating state based on the material composition of each fuel rod. By using a flux map processing program, a flux map simulation measurement is performed using the generated theoretical database and response intensity data of the detector to obtain a simulated power distribution that is approximately equal to the real power distribution. A statistical analysis is performed on the deviations in various parameters between the simulated power distribution and the actual power distribution under various simulated operating conditions, and statistical methods are used to finally obtain the measurement uncertainty of the reactor core power distribution.

It should be appreciated that although the steps in the flow charts of the embodiments described above are shown sequentially according to the arrows, these steps are not definitely executed in the order indicated by the arrows. Unless otherwise specified in this document, there is no strict order in which these steps are performed, and these steps may be performed in any other order. Moreover, at least some steps in the flow charts involved in the embodiments described above may include multiple steps or multiple stages. These steps or stages are not definitely completed at the same time, but may be executed at different moments. These steps or stages are not definitely executed sequentially, but may be executed in turn or alternately with other steps or at least some of the steps or stages in other steps.

Based on the same inventive concept, the present application further provides an analysis apparatus for measurement uncertainty of a reactor core power distribution to implement the analysis method for the measurement uncertainty of the reactor core power distribution as described above. The solution provided by the apparatus is similar to the solution described in the above method. Therefore, as for the specific limitations in one or more embodiments of the analysis apparatus for the measurement uncertainty of the reactor core power distribution provided below, reference can be made to the limitations in the analysis method for the measurement uncertainty of the reactor core power distribution described above, which will not be repeated here.

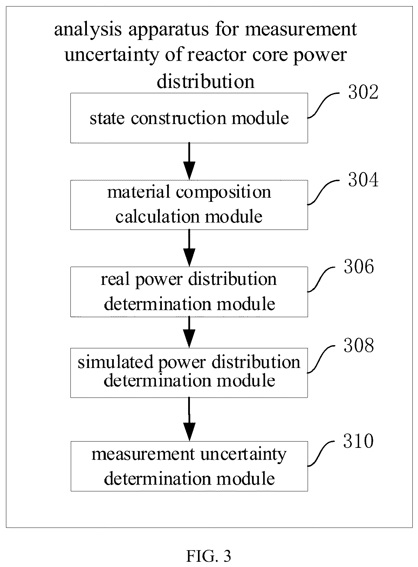

In an embodiment, as shown in FIG. 3, an analysis apparatus for measurement uncertainty of a reactor core power distribution is provided, including:
a state construction module 302 configured to construct a simulated operating state based on an actual operating state of the reactor core, determine state parameters of the reactor core under the simulated operating state, and obtain a group constant representing a grid cross-sectional value of the reactor core;
a material composition calculation module 304 configured to perform a material composition calculation based on a material calculation subroutine in a precise calculation program and the state parameters to obtain the material composition of each fuel rod in the reactor core;
a real power distribution determination module 306 configured to perform a power calculation based on a power calculation subroutine in the precise calculation program and the material composition of each fuel rod, obtain a real power distribution of the reactor core, and obtain a response intensity of a detector in the reactor core;
a simulated power distribution determination module 308 configured to determine power parameters of the reactor core under the simulated operating state based on the state parameters and the group constant, and perform a flux map simulation measurement to obtain the simulated power distribution of the reactor core based on the response intensity of the detector and the power parameters; and
a measurement uncertainty determination module 310 configured to determine the measurement uncertainty of the reactor core power distribution based on a difference between the real power distribution and the simulated power distribution.

In an embodiment, the state construction module includes:
a parameter obtaining unit configured to obtain assembly burnup and the state parameters of the reactor core under the simulated operating state; and
a group constant determination unit configured to determine assembly and reflector layer group constants of the reactor core based on the assembly burnup and the state parameters.

In an embodiment, the simulated power distribution determination module includes:
a power parameter determination unit configured to determine the power parameters of the reactor core under the simulated operating state using a reactor core nuclear design program based on the state parameters and the group constant;
a theoretical database generation unit configured to construct a theoretical database for implementing power distribution reconfiguration of the reactor core based on the power parameters; and
a first simulated power distribution determination unit configured to perform a flux map simulation measurement to obtain the simulated power distribution of the reactor core based on the theoretical database.

In an embodiment, the material composition calculation module includes:
a burnup calculation unit configured to calculate burnup of each assembly in the reactor core under the simulated operating state using a burnup calculation subroutine in the Monte Carlo program based on the state parameters to obtain the burnup of each assembly; and
a material composition calculation unit configured to determine the material composition of the fuel rod in each assembly using the material calculation subroutine in the Monte Carlo program based on the burnup of each assembly.

In an embodiment, the reaction intensity obtaining unit includes:
an error obtaining subunit configured to obtain a manufacturing error and a current algorithm error of the detector;
a response intensity obtaining subunit configured to add data representing the uncertainty to the response intensity of the detector based on the manufacturing error and the current algorithm error to obtain the response intensity of the detector incorporating the data representing the uncertainty.

In an embodiment, the analysis apparatus for the measurement uncertainty of the reactor core power distribution further includes:
a state parameter determination unit configured to construct a plurality of simulated operating states of the reactor core and state parameters of the reactor core under each simulated operating state;
a power deviation determination unit configured to obtain a power deviation between an actual power distribution and a simulated power distribution of the reactor core under each simulated operating state;
a measurement uncertainty determination unit configured to perform a statistical analysis on the power deviation under each simulated operating state to obtain the measurement uncertainty of the reactor core power distribution.

Each module in the aforementioned analysis apparatus for the measurement uncertainty of the reactor core power distribution can be implemented entirely or partially through software, hardware, or combinations thereof. The above modules can be embedded in or independent of a processor of a computer device in hardware form, or may be stored in a memory of the computer device in software form, so that the processor can invoke and execute the corresponding operations of the above modules.

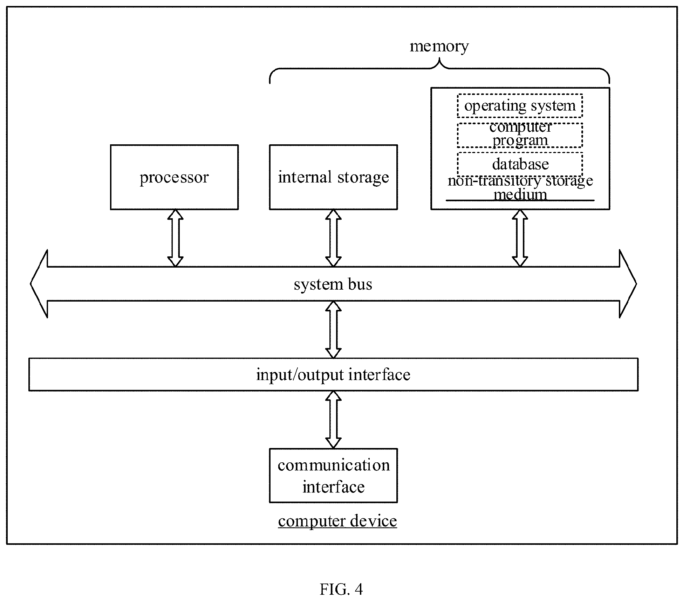

In an embodiment, a computer device is provided, which may be a server, and an internal structure diagram thereof may be as shown in FIG. 4. The computer device includes a processor, a memory, an input/output interface (I/O), and a communication interface. The processor, the memory, and the input/output interface are connected via a system bus, and the communication interface is connected to the system bus via the input/output interface. The processor of the computer device provides computing and control capabilities. The memory of the computer device includes a non-transitory storage medium and an internal storage. The non-transitory storage medium stores an operating system, computer-readable instructions, and a database. This internal storage provides an environment for operations of the operating system and computer-readable instructions in the non-transitory storage medium. The database of the computer equipment is configured to store an actual operating state of the reactor core, a simulated operating state of the reactor core, state parameters of the reactor core under the simulated operating state, a group constant representing a grid cross-sectional value of the reactor core, power parameters of the reactor core under the simulated operating state, a simulated power distribution of the reactor core, a precise calculation program, material composition of each fuel rod, a real power distribution of the reactor core, measurement uncertainty of a power distribution of the reactor core, assembly burnup and reflector layer parameters of the reactor core under the actual operating state, a theoretical database, the Monte Carlo program, a response intensity of a detector in the reactor core under the simulated operating state, a manufacturing error of the detector, and current algorithm error data of the detector. The input/output interface of the computer device is configured to exchange information between the processor and an external device. The communication interface of the computer device is configured to communicate with an external terminal via a network connection. When the computer-readable instructions are executed by a processor, an analysis method for measurement uncertainty of a reactor core power distribution is implemented.

Those skilled in the art may understand that the structure shown in FIG. 4 is merely a block diagram of a portion of the structure related to the present application and does not constitute a limitation on the computer device to which the present application is applied. Specific computer devices may include more or fewer components than those shown in the figure, or may combine certain components, or may have different component arrangements.

In an embodiment, a computer device is provided, which includes a memory storing computer-readable instructions and one or more processors. The computer-readable instructions, when executed by one or more processors, cause the one or more processors to perform the following steps:
constructing a simulated operating state based on an actual operating state of the reactor core, determining state parameters of the reactor core under the simulated operating state, and obtaining a group constant representing a grid cross-sectional value of the reactor core; performing a material composition calculation based on a material calculation subroutine in a precise calculation program and the state parameters, and obtaining the material composition of each fuel rod in the reactor core; performing a power calculation based on a power calculation subroutine in the precise calculation program and the material composition of each fuel rod, obtaining a real power distribution of the reactor core, and obtaining a response intensity of a detector in the reactor core; determining power parameters of the reactor core under the simulated operating state based on the state parameters and the group constant, performing a flux map simulation measurement based on the response intensity of the detector and the power parameters, and obtaining the simulated power distribution of the reactor core; and determining the measurement uncertainty of the reactor core power distribution based on a difference between the real power distribution and the simulated power distribution.

In an embodiment, the processor, when executing the computer-readable instructions, further performs the following steps:
obtaining assembly burnup and the state parameters of the reactor core under the simulated operating state; and determining assembly and reflector layer group constants of the reactor core based on the assembly burnup and the state parameters.

In an embodiment, the processor, when executing the computer-readable instructions, further performs the following steps:
determining the power parameters of the reactor core under the simulated operating state using a reactor core nuclear design program based on the state parameters and the group constant; constructing a theoretical database for implementing power distribution reconfiguration of the reactor core based on the power parameters; performing a flux map simulation measurement based on the theoretical database, and obtaining the simulated power distribution of the reactor core.

In an embodiment, the processor, when executing the computer-readable instructions, further performs the following steps:
calculating burnup of each assembly in the reactor core under the simulated operating state using a burnup calculation subroutine in the Monte Carlo program based on the state parameters to obtain the burnup of each assembly; and determining a material composition of a fuel rod in each assembly using the material calculation subroutine in the Monte Carlo program based on the burnup of each assembly.

In an embodiment, the processor, when executing the computer-readable instructions, further performs the following steps:
obtaining a manufacturing error and a current algorithm error of the detector; adding data representing the uncertainty to the response intensity of the detector based on the manufacturing error and the current algorithm error, and obtaining the response intensity of the detector incorporating the data representing the uncertainty.

In an embodiment, the processor, when executing the computer-readable instructions, further performs the following steps:
constructing a plurality of simulated operating states of the reactor core and state parameters of the reactor core under each simulated operating state; obtaining a power deviation between an actual power distribution and a simulated power distribution of the reactor core under each simulated operating state; performing a statistical analysis on the power deviation under each simulated operating state to obtain the measurement uncertainty of the reactor core power distribution.

In an embodiment, one or more non-transitory storage media storing computer-readable instructions are provided, which, when executed by one or more processors, cause the one or more processors to perform the following steps:
constructing a simulated operating state based on an actual operating state of the reactor core, determining state parameters of the reactor core under the simulated operating state, and obtaining a group constant representing a grid cross-sectional value of the reactor core; performing a material composition calculation based on a material calculation subroutine in a precise calculation program and the state parameters, and obtaining the material composition of each fuel rod in the reactor core; performing a power calculation based on a power calculation subroutine in the precise calculation program and the material composition of each fuel rod, obtaining a real power distribution of the reactor core, and obtaining a response intensity of a detector in the reactor core; determining power parameters of the reactor core under the simulated operating state based on the state parameters and the group constant, performing a flux map simulation measurement based on the response intensity of the detector and the power parameters, and obtaining the simulated power distribution of the reactor core; and determining the measurement uncertainty of the reactor core power distribution based on a difference between the real power distribution and the simulated power distribution.

In an embodiment, the processor, when executing the computer-readable instructions, further performs the following steps:
obtaining assembly burnup and the state parameters of the reactor core under the simulated operating state; and determining assembly and reflector layer group constants of the reactor core based on the assembly burnup and the state parameters.

In an embodiment, the processor, when executing the computer-readable instructions, further performs the following steps:
determining the power parameters of the reactor core under the simulated operating state using a reactor core nuclear design program based on the state parameters and the group constant; constructing a theoretical database for implementing power distribution reconfiguration of the reactor core based on the power parameters; performing a flux map simulation measurement based on the theoretical database, and obtaining the simulated power distribution of the reactor core.

In an embodiment, the processor, when executing the computer-readable instructions, further performs the following steps:
calculating burnup of each assembly in the reactor core under the simulated operating state using a burnup calculation subroutine in the Monte Carlo program based on the state parameters to obtain the burnup of each assembly; and determining a material composition of a fuel rod in each assembly using the material calculation subroutine in the Monte Carlo program based on the burnup of each assembly.

In an embodiment, the processor, when executing the computer-readable instructions, further performs the following steps:
obtaining a manufacturing error and a current algorithm error of the detector; and adding data representing the uncertainty to the response intensity of the detector based on the manufacturing error and the current algorithm error to obtain the response intensity of the detector incorporating the data representing the uncertainty.

In an embodiment, the processor, when executing the computer-readable instructions, further performs the following steps:
constructing a plurality of simulated operating states of the reactor core and state parameters of the reactor core under each simulated operating state; obtaining a power deviation between an actual power distribution and a simulated power distribution of the reactor core under each simulated operating state; performing a statistical analysis on the power deviation under each simulated operating state to obtain the measurement uncertainty of the reactor core power distribution.

In an embodiment, a computer-readable instruction product is provided, including computer-readable instructions. The computer-readable instructions, when executed by a processor, cause the processor to perform the following steps:
constructing a simulated operating state based on an actual operating state of the reactor core, determining state parameters of the reactor core under the simulated operating state, and obtaining a group constant representing a grid cross-sectional value of the reactor core; performing a material composition calculation based on a material calculation subroutine in a precise calculation program and the state parameters, and obtaining the material composition of each fuel rod in the reactor core; performing a power calculation based on a power calculation subroutine in the precise calculation program and the material composition of each fuel rod, obtaining a real power distribution of the reactor core, and obtaining a response intensity of a detector in the reactor core; determining power parameters of the reactor core under the simulated operating state based on the state parameters and the group constant, performing a flux map simulation measurement based on the response intensity of the detector and the power parameters, and obtaining the simulated power distribution of the reactor core; and determining the measurement uncertainty of the reactor core power distribution based on a difference between the real power distribution and the simulated power distribution.

In an embodiment, the processor, when executing the computer-readable instructions, further performs the following steps:
obtaining assembly burnup and the state parameters of the reactor core under the simulated operating state; and determining assembly and reflector layer group constants of the reactor core based on the assembly burnup and the state parameters.

In an embodiment, the processor, when executing the computer-readable instructions, further performs the following steps:
determining the power parameters of the reactor core under the simulated operating state using a reactor core nuclear design program based on the state parameters and the group constant; constructing a theoretical database for implementing power distribution reconfiguration of the reactor core based on the power parameters; performing a flux map simulation measurement based on the theoretical database to obtain the simulated power distribution of the reactor core.

In an embodiment, the processor, when executing the computer-readable instructions, further performs the following steps:
calculating burnup of each assembly in the reactor core under the simulated operating state using a burnup calculation subroutine in the Monte Carlo program based on the state parameters, and obtaining the burnup of each assembly; and determining a material composition of a fuel rod in each assembly using the material calculation subroutine in the Monte Carlo program based on the burnup of each assembly.

In an embodiment, the processor, when executing the computer-readable instructions, further performs the following steps:
obtaining a manufacturing error and a current algorithm error of the detector; and adding data representing the uncertainty to the response intensity of the detector based on the manufacturing error and the current algorithm error to obtain the response intensity of the detector incorporating the data representing the uncertainty.

In an embodiment, the processor, when executing the computer-readable instructions, further performs the following steps:
constructing a plurality of simulated operating states of the reactor core and state parameters of the reactor core under each simulated operating state; obtaining a power deviation between an actual power distribution and a simulated power distribution of the reactor core under each simulated operating state; performing a statistical analysis on the power deviation under each simulated operating state to obtain the measurement uncertainty of the reactor core power distribution.

It should be noted that the user information (including but not limited to user device information, user personal information, etc.) and data (including but not limited to data used for analysis, data stored, data displayed, etc.) involved in the present application are all information and data authorized by the user or fully authorized by all parties, and the collection, use and processing of the relevant data shall comply with the relevant laws, regulations and standards of the relevant countries and regions.

Those skilled in the art may understand that all or part of the processes in the above embodiments can be implemented by instructing related hardware with computer-readable instructions. The computer-readable instructions can be stored in a non-transitory computer-readable storage medium. When the computer-readable instructions are executed, the processes in the above embodiments of the method are included. Any references to memory, database, or other medium used in the embodiments provided in the present invention may include at least one of non-transitory memory and transitory memory. The non-transitory memory may include a read-only memory (ROM), a magnetic tape, a floppy disk, a flash memory, an optical memory, a high-density embedded non-transitory memory, a resistive random access memory (ReRAM), a magnetic random access memory (MRAM), a ferroelectric random access memory (FRAM), a phase change memory (PCM), a graphene memory, etc. The transitory memory may include a random access memory (RAM) or an external cache memory. By way of illustration and not limitation, RAM may take many forms, such as a Static Random Access Memory (SRAM) or a Dynamic Random Access Memory (DRAM). The databases involved in the various embodiments provided in the present invention may include at least one of a relational database and a non-relational database. The non-relational database may include, but is not limited to, a blockchain-based distributed database. The processor involved in the various embodiments provided in the present invention may be a general-purpose processor, a central processing unit, a graphics processor, a digital signal processor, a programmable logic device, a quantum computing-based data processing logic device, etc., which are not limited there.

The technical features in the above embodiments can be arbitrarily combined. In order to make the description concise, all possible combinations of the technical features in the above embodiments are not described. However, as long as there is no contradiction in the combinations of these technical features, these combinations should be regarded as falling within the scope of the present invention.

The above-described embodiments merely express several implementation modes of the present application, and the description thereof is relatively specific and detailed, but it should not be construed as limiting the scope of the present application. It should be pointed out that those skilled in the art can make several modifications and improvements without departing from the concept of the present application, which all fall within the scope of protection of the present application. Therefore, the protection scope of the present application should be subject to the appended claims.

## Claims

1. An analysis method for measurement uncertainty of a reactor core power distribution, comprising:
constructing a simulated operating state based on an actual operating state of a reactor core, determining state parameters of the reactor core under the simulated operating state, and obtaining a group constant representing a grid cross-sectional value of the reactor core;
performing a material composition calculation based on a material calculation subroutine in a precise calculation program and the state parameters to obtain a material composition of each fuel rod in the reactor core;
performing a power calculation based on a power calculation subroutine in the precise calculation program and the material composition of each fuel rod to obtain a real power distribution of the reactor core, and obtaining a response intensity of a detector in the reactor core;
determining power parameters of the reactor core under the simulated operating state based on the state parameters and the group constant, performing a flux map simulation measurement based on the response intensity of the detector and the power parameters to obtain a simulated power distribution of the reactor core; and
determining the measurement uncertainty of the reactor core power distribution based on a difference between the real power distribution and the simulated power distribution.

2. The method according to claim 1, wherein obtaining the group constant representing the grid cross-sectional value of the reactor core comprises:
obtaining assembly burnup and the state parameters of the reactor core under the simulated operating state; and
determining assembly and reflector layer group constants of the reactor core based on the assembly burnup and the state parameters.

3. The method according to claim 1, wherein determining power parameters of the reactor core under the simulated operating state based on the state parameters and the group constant comprises:
determining the power parameters of the reactor core under the simulated operating state using a reactor core nuclear design program based on the state parameters and the group constant;
wherein the method further comprises:
after determining the power parameters of the reactor core under the simulated operating state,
constructing a theoretical database for implementing power distribution reconfiguration of the reactor core based on the power parameters; and
performing a flux map simulation measurement based on the theoretical database, and obtaining the simulated power distribution of the reactor core.

4. The method according to claim 3, wherein, after determining the power parameters of the reactor core under the simulated operating state, the method further comprises:
obtaining a cross section of the detector; and
generating the theoretical database for implementing power distribution reconfiguration of the reactor core based on the power parameters and the cross section of the detector.

5. The method according to claim 4, wherein generating the theoretical database for implementing power distribution reconfiguration of the reactor core comprises:
determining a data value representing uncertainty to be added to the theoretical database based on a nuclear data deviation of the reactor core and a reactor core design parameter deviation; and
adding the data value representing the uncertainty to the theoretical database to obtain the theoretical database incorporating the data value representing the uncertainty.

6. The method according to claim 1, wherein performing the material composition calculation based on the material calculation subroutine in the precise calculation program and the state parameters to obtain the material composition of each fuel rod in the reactor core comprises:
calculating burnup of each assembly in the reactor core under the simulated operating state using a burnup calculation subroutine in a Monte Carlo program based on the state parameters to obtain the burnup of each assembly; and
determining the material composition of the fuel rod in each assembly using a material calculation subroutine in the Monte Carlo program based on the burnup of each assembly.

7. The method according to claim 1, wherein obtaining the response intensity of the detector in the reactor core comprises:
obtaining a manufacturing error and a current algorithm error of the detector; and
adding data representing the uncertainty to the response intensity of the detector based on the manufacturing error and the current algorithm error, obtaining the response intensity of the detector incorporating the data representing the uncertainty.

8. The method according to claim 1, wherein obtaining the response intensity of the detector in the reactor core comprises:
obtaining a neutron flux in the reactor core when a specification of the detector in the reactor core is determined; and
determining the response intensity of the detector based on the neutron flux.

9. The method according to claim 1, further comprising:
constructing a plurality of simulated operating states of the reactor core and state parameters of the reactor core under each simulated operating state;
obtaining a power deviation between the actual power distribution and the simulated power distribution of the reactor core under each simulated operating state; and
performing a statistical analysis on the power deviation under each simulated operating state to obtain the measurement uncertainty of the reactor core power distribution.

10. An analysis apparatus for measurement uncertainty of a reactor core power distribution, comprising:
a state construction module, configured to construct a simulated operating state based on an actual operating state of the reactor core, determine state parameters of the reactor core under the simulated operating state, and obtain a group constant representing a grid cross-sectional value of the reactor core;
a material composition calculation module, configured to perform a material composition calculation based on a material calculation subroutine in a precise calculation program and the state parameters to obtain a material composition of each fuel rod in the reactor core;
a real power distribution determination module, configured to perform a power calculation based on a power calculation subroutine in the precise calculation program and the material composition of each fuel rod to obtain a real power distribution of the reactor core, and obtain a response intensity of a detector in the reactor core;
a simulated power distribution determination module, configured to determine power parameters of the reactor core under the simulated operating state based on the state parameters and the group constant, perform a flux map simulation measurement to obtain the simulated power distribution of the reactor core based on the response intensity of the detector and the power parameters; and
a measurement uncertainty determination module, configured to determine the measurement uncertainty of the reactor core power distribution based on a difference between the real power distribution and the simulated power distribution.

11. The apparatus according to claim 10, wherein the state construction module comprises:
a parameter obtaining unit, configured to obtain assembly burnup and the state parameters of the reactor core under the simulated operating state; and
a group constant determination unit, configured to determine assembly and reflector layer group constants of the reactor core based on the assembly burnup and the state parameters.

12. The apparatus according to claim 10, wherein the simulated power distribution determination module comprises:
a power parameter determination unit, configured to determine the power parameters of the reactor core under the simulated operating state using a reactor core nuclear design program based on the state parameters and the group constant;
a theoretical database generation unit, configured to construct a theoretical database for implementing power distribution reconfiguration of the reactor core based on the power parameters; and
a first simulated power distribution determination unit, configured to perform a flux map simulation measurement to obtain the simulated power distribution of the reactor core based on the theoretical database.

13. The apparatus according to claim 12, wherein the theoretical database generation unit comprises:
a cross section obtaining subunit, configured to obtain a cross section of the detector; and
a theoretical database generation subunit, configured to generate the theoretical database for implementing power distribution reconfiguration of the reactor core based on the power parameters and the cross section of the detector.

14. The apparatus according to claim 13, wherein the theoretical database generation subunit comprises:
a data determination subunit, configured to determine a data value representing uncertainty to be added to the theoretical database based on a nuclear data deviation of the reactor core and a reactor core design parameter deviation; and
a data adding subunit, configured to add the data value representing the uncertainty to the theoretical database to obtain the theoretical database incorporating the data value representing the uncertainty.

15. The apparatus according to claim 10, wherein the material composition calculation module comprises:
a burnup calculation unit, configured to calculate and obtain burnup of each assembly in the reactor core under the simulated operating state using a burnup calculation subroutine in a Monte Carlo program based on the state parameters; and
a material composition calculation unit, configured to determine the material composition of the fuel rod in each assembly using a material calculation subroutine in the Monte Carlo program based on the burnup of each assembly.

16. The apparatus according to claim 10, wherein the reaction intensity obtaining unit comprises:
an error obtaining subunit, configured to obtain a manufacturing error and a current algorithm error of the detector; and
a response intensity obtaining subunit, configured to add data representing uncertainty to the response intensity of the detector based on the manufacturing error and the current algorithm error to obtain the response intensity of the detector incorporating the data representing the uncertainty.

17. The apparatus according to claim 10, wherein the reaction intensity obtaining unit comprises:
a flux obtaining subunit, configured to obtain a neutron flux in the reactor core when a specification of the detector in the reactor core is determined; and
an intensity obtaining subunit, configured to determine the response intensity of the detector based on the neutron flux.

18. The apparatus according to claim 10, further comprising:
a state parameter determination unit, configured to construct a plurality of simulated operating states of the reactor core and state parameters of the reactor core under each simulated operating state;
a power deviation determination unit, configured to obtain a power deviation between the actual power distribution and the simulated power distribution of the reactor core under each simulated operating state; and
a measurement uncertainty determination unit, configured to perform a statistical analysis on the power deviation under each simulated operating state to obtain the measurement uncertainty of the reactor core power distribution.

19. A computer device, comprising a processor and a memory storing computer-readable instructions, wherein the processor, when executing the computer-readable instructions, performs steps of the method of any one of claims 1 to 9.

20. A computer-readable storage medium, on which computer-readable instructions are stored, wherein the computer-readable instructions, when executed by a processor, cause the processor to perform steps of the method of any one of claims 1 to 9.

21. A computer-readable instruction product, comprising computer-readable instructions, wherein the computer-readable instructions, when executed by a processor, cause the processor to perform steps of the method of any one of claims 1 to 9.
